# EUROPEAN PATENT SPECIFICATION

(11) **EP 1 489 334 B1**
(45) Date of publication and mention of the grant of the patent: **09.01.2008**
(21) Application number: 02703924.7
(22) Date of filing: 06.03.2002
(51) Int. Cl.: F16F 9/14

(54) **ROTARY DAMPER**
ROTATIONSDÄMPFER
AMORTISSEUR ROTATIF

(43) Date of publication of application: 22.12.2004
(73) Proprietor: KABUSHIKI KAISHA SOMIC ISHIKAWA, Sumida-ku, Tokyo 130-0004 (JP)
(72) Inventor: FUKUKAWA, Takao, Kabushiki Kaisha Somic, Hamamatsu-shi, Shizuoka 435-8560 (JP)
(74) Representative: Wagner, Bernhard Peter
(86) International application number: PCT/JP2002/002077
(87) International publication number: WO 2003/074901

(56) References cited:
- JP-A- 5 033 822
- JP-A- 8 303 512
- JP-U- 4 107 536
- JP-U- 59 140 955
- US-A- 1 675 760
- US-A- 1 773 207

## Description

### TECHNICAL FIELD

The present invention relates to a one-way rotary damper used for delaying rotational motion when an open/close body such as lid or door is opened or closed.

### BACKGROUND ART

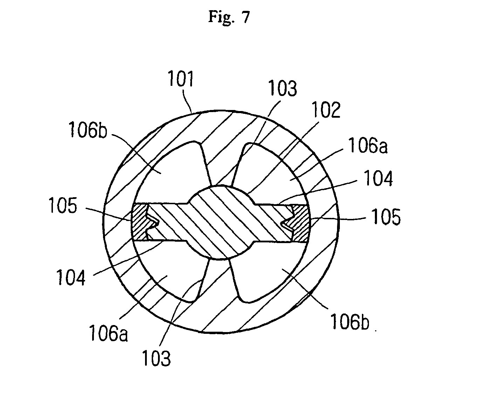

As shown in Fig. 7 for example, a conventional rotary damper of this kind includes a rotation shaft 102 disposed along an axis of a body case 101, partition walls 103 provided so as to partition spaces formed between the rotation shaft 102 and the body case 101, and a vane member 104 disposed to be rotatable with rotation of the rotation shaft 102 in a liquid chamber partitioned by the partition wall 103 in which viscous liquid is charged. The rotary damper also includes valve members 105. Each the valve member 105 is substantially T-shaped as viewed from above, and has an engaging projection capable of engaging into a groove formed in a tip end surface of the vane member 104 with a play therebetween, and has an arc portion whose outer peripheral surface slides on an inner peripheral surface of the body case 101 as the vane member 104 rotates.

Each the valve member 105 of the rotary damper includes is provided with a backflow groove (not shown). The backflow groove is closed when the vane member 104 rotates in one direction and viscous liquid passes through the backflow groove when the vane member 104 rotates in the opposite direction. An open/close body which is a subject to be controlled rotates in one direction, e.g., in a closing direction, the rotation shaft 102 connected to a shaft of the open/close body rotates in association with the rotational motion of the open/close body, and with this rotation, the vane member 104 rotates in the liquid chamber. Each the liquid chamber is partitioned by the vane member 104 and the valve member 105 into two chambers, i.e., a pressure chamber 106a and a non-pressure chamber 106b. When the vane member 104 rotates, the viscous liquid in the pressure chamber 106a is pressed and moved into the non-pressure chamber 106b. At that time, since the backflow groove of the valve member 105 is closed, the viscous liquid moves through a slight gap formed between the outer peripheral surface of the arc portion of the valve member 105 and the inner peripheral surface of the body case 101. This rotary damper exhibits a predetermined braking force by a resistance generated when the viscous liquid moves, and can delay the rotational motion of the open/close body.

On the other hand, when the open/close body which is the subject to be controlled rotates in the opposite direction (opening direction), the rotation shaft 102 rotates in a direction opposite from that described above in association with the rotational motion of the open/close body, and with this rotation, the vane member 104 rotates in the opposite direction in the liquid chamber. With this, the viscous liquid in the non-pressure chamber 106b is pressed and moved into the pressure chamber 106a. At that time, since the viscous liquid passes through the backflow groove of the valve member 105 and moves, almost no resistance is generated when the viscous liquid moves. Thus, the rotary damper does not exhibit the braking force and allows the open/close body to rotate without delay.

In the case of the one-way rotary damper capable of exhibiting the braking force only when the rotation shaft rotates in one direction, the braking characteristics are varied depending upon a size of the gap through which the viscous liquid passes when the viscous liquid moves from the pressure chamber to the non-pressure chamber.

In the above-described rotary damper, however, since the gap is formed between the inner peripheral surface of the body case 101 and the outer peripheral surface of the arc portion of the valve member 105 which can slide on the tip end of the vane member 104 in the circumferential direction, if a plurality of rotary dampers are manufactured, it is extremely difficult to make the sizes of all the gaps uniform.

That is, in order to make the sizes of the gaps uniform in the above-described rotary damper, a precise working is required for at least three parts, i.e., the vane member 104 which is integrally formed with the rotation shaft 102, the valve member 105 and the body case 101. However, in the actual case, size precision of among the parts is varied and as a result, variation is generated in size of the gap formed by assembling these parts.

Thus, in the rotary damper having the above-described configuration, if a plurality of rotary dampers are manufactured, the braking characteristics are prone to be varied depending upon individual rotary damper, and it is difficult to obtain stable braking characteristics.

Furthermore, when the vane member 104 and the rotation shaft 102 are integrally formed together, in order to form a groove in the tip end surface of the vane member 104 into which the valve member 105 can engage, the shape of a mold becomes complicated and the cost of the mold is increased and thus, it is difficult to reduce the manufacturing cost of the rotary damper.

On the other hand, there exists a one-way rotary damper in which a liquid passage penetrating the vane member in its thickness direction is formed in the vane member, the liquid passage is provided with a valve body which control the flow of the viscous liquid, a tip end surface of the vane member directly slides on the inner peripheral surface of the body case and rotates. According to the rotary damper having this configuration, even if a plurality of rotary dampers are manufactured, since the valve member is not interposed between the tip end surface of the vane member and the inner peripheral surface of the body case, it is possible to reduce the variation in size of the gap (gap between the tip end surface of the vane member and the inner peripheral surface of the body case) through which the viscous liquid passes when the viscous liquid moves from the pressure chamber to the non-pressure chamber.

However, in order to operate the valve body such that the liquid passage is closed when the vane member rotates in one direction and the liquid passage is opened when the vane member rotates in the opposite direction, it is necessary to provide a play in the liquid passage for allowing the valve body to move therein, and the thickness of the vane member is adversely increased. Thus, if such a configuration is employed, there is a problem that the rotation angle range of the vane member is narrowed.

When the vane member rotates in one direction, in order to reliably close the liquid passage by the valve body from the initial time point of the rotation, it is considered to provide a spring or the like for biasing the valve body so that the valve body disposed in the liquid passage having the play close the opening of the liquid passage on the side of the pressure chamber in a normal state. According to this configuration, however, the thickness of the vane member is further increased.

Since there is a limit for increasing the thickness of the vane member, a spring or the like is not conventionally disposed in the vane member having a lateral liquid passage.

Therefore, at the initial time point of the rotation of the vane member, the braking force to be exhibited is prone to be unstable, and it is difficult to reliably exhibit a braking force from that time point.

Another rotary damper comprising the features of the preamble of claim 1 is known from document US-A-1,773,207.

The present invention has been accomplished in view of the above points, and it is a first object of the invention to provide a rotary damper capable of reducing the variation in size of a gap through which viscous liquid passes when the viscous liquid moves from a pressure chamber to a non-pressure chamber, and capable of obtaining stable braking characteristics.

It is a second object of the invention to provide a rotary damper in which a valve body for controlling a flow of viscous liquid is disposed in a vane member, a thickness of the vane member can be reduced as compared with the conventional technique, and when the vane member rotates in one direction, the valve body can be operated such that a liquid passage is reliably closed from the initial time point of the rotation.

### DISCLOSURE OF THE INVENTION

To achieve the above objects, the invention provides a rotary damper comprising the features of claim 1.

According to claim 2, in the rotary damper of claim 1, the large hole portion and small hole portion are substantially circular holes, the valve body is formed into a spherical shape having a diameter greater than an inner diameter of the small hole portion.

According to claim 3, in the rotary damper of claim 1 or 2, the rotary damper further comprises a spring which biases the valve body such that the valve body closes a boundary portion between the large hole portion and the small hole portion of the liquid passage in a normal state.

### BRIEF DESCRIPTION OF THE DRAWINGS

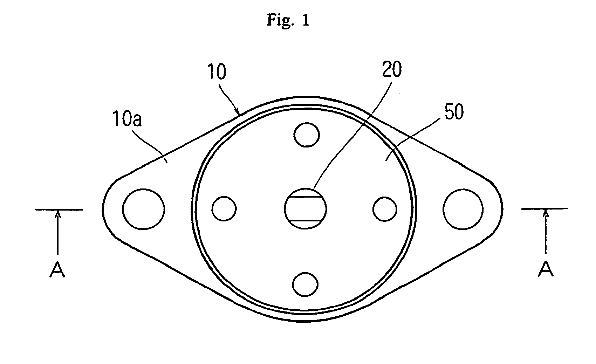

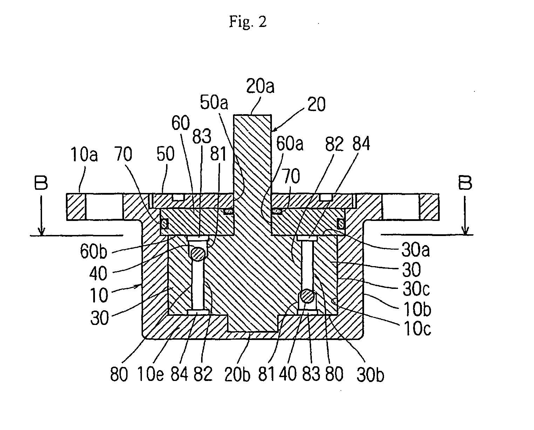

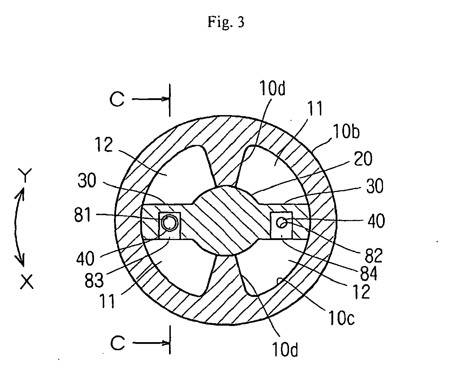

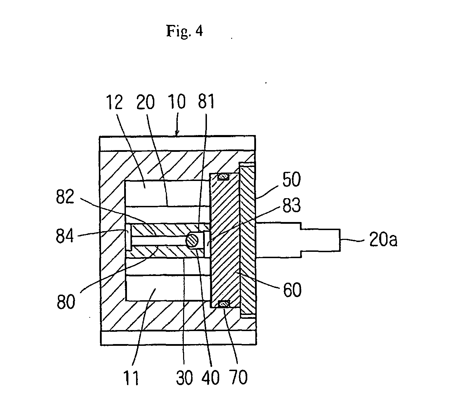

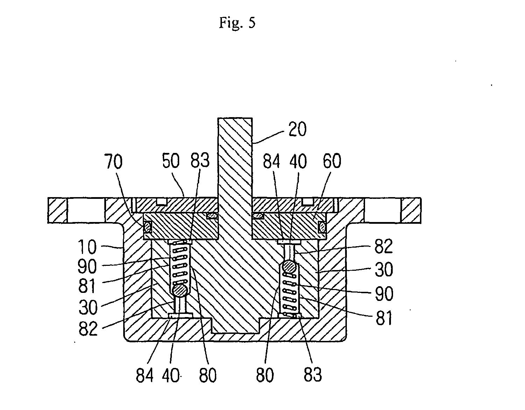

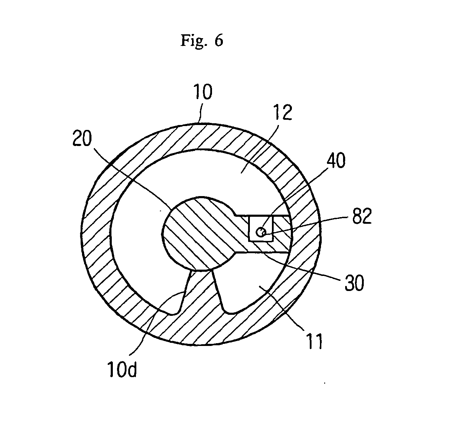

Fig. 1 is a plan view showing a rotary damper according to an embodiment of the present invention, Fig. 2 is a sectional view taken along a line A-A in Fig. 1, Fig. 3 is a sectional view taken along a line B-B in Fig. 2, Fig. 4 is a sectional view taken along a line C-C in Fig. 3, Fig. 5 is a sectional view showing a rotary damper according to another embodiment of the invention, Fig. 6 is a sectional view showing a rotary damper according to another embodiment of the invention and Fig. 7 is a sectional view showing a conventional rotary damper.

In the drawings, a reference number 10 represents a body case, a reference number 10d represents a partition wall, a reference number 11 represents a pressure chamber, a reference number 12 represents a non-pressure chamber, a reference number 20 represents a rotation shaft, a reference number 30 represents a vane member, a reference number 40 represents a valve body, a reference number 50 represents a lid member, a reference number 60 represents a guide member, a reference number 70 represents a seal member, a reference number 80 represents a liquid passage, a reference number 81 represents a large hole portion, a reference number 82 represents a small hole portion and a reference number 90 represents a spring.

### BEST MODE FOR CARRYING OUT THE INVENTION

The present invention will be explained in more detail based on an embodiment shown in the drawings below.

As shown in Figs. 1 to 4, the rotary damper according to the embodiment of the invention comprises a body case 10, a rotation shaft 20, vane members 30, valve bodies 40, a lid member 50 and a guide member 60.

The body case 10 comprises a plate-like mounting portion 10a having a substantially rhombus shape as viewed from above, and a cylindrical portion 10b having a substantially tubular type and a closed bottom surface.

As shown in Fig. 3, the cylindrical portion 10b has two partition walls 10d which are opposed to each other with the rotation shaft 20 interposed therebetween. Each the partition wall 10d projects in the axial direction from an inner peripheral surface 10c of the cylindrical portion 10b, and partitions a space formed between the rotation shaft 20 and the body case 10.

A tip end surface of the partition wall 10d has a substantially arc cross section and an outer peripheral surface of the rotation shaft 20 slides on the tip end surface when the rotation shaft 20 rotates. The two chambers formed in the cylindrical portion 10b partitioned by each the partition wall 10d are liquid chambers. Viscous liquid such as silicon oil is charged into each liquid chamber.

Each the liquid chamber is closed by a closing member comprising the lid member 50 which closes an opening formed in an upper surface of the body case 10 and the guide member 60 disposed in the lid member 50.

Insertion holes 50a and 60a through which one end 20a of the rotation shaft 20 is inserted through the lid member 50 and the guide member 60 which constitute the closing member. A seal member 70 for preventing viscous liquid charged into each liquid chamber from leaking is disposed around the guide member 60.

As shown in Fig. 2, the one end 20a of the rotation shaft 20 projects from the body case 10, the other end 20b is fitted into a recess formed in an inner surface of a bottom wall (end wall which closes a bottom surface of the cylindrical portion 10b) 10e of the body case 10, and the rotation shaft 20 is disposed along the axis of the body case 10.

As shown in Fig. 2, each the vane member 30 is formed into a plate-like shape having a predetermined thickness. A length between upper and lower end surfaces 30a and 30b of the vane member 30 is substantially equal to a distance between a lower surface of the closing member (lower surface of the guide member 60) 60b and an inner surface of the bottom wall 10e of the body case 10, and a diametrical length of the vane member 30 (a length between the tip end surface 30c and a phantom rear end surface of the vane member 30 which comes into contact with the outer peripheral surface of the rotation shaft 20) is substantially equal to a distance between the outer peripheral surface of the rotation shaft 20 and the inner peripheral surface of the body case 10 (inner peripheral surface of the cylindrical portion 10b). The vane members 30 are opposed to each other with the rotation shaft 20 interposed therebetween.

As shown in Figs. 2 and 3, the vane members 30 are integrally formed on the rotation shaft 20, and the vane members 30 are disposed such that they rotate as in the liquid chambers as the rotation shaft 20 rotates. By disposing the vane members 30 in this manner, each liquid chamber is partitioned into two chambers, i.e., a pressure chamber 11 and a non-pressure chamber 12.

Each vane member 30 is formed with a liquid passage 80 which brings the pressure chamber 11 and the non-pressure chamber 12 into communication with each other. As shown in Figs. 2 and 4, the liquid passage 80 comprises a large hole portion 81 formed in a range of a thickness of the vane member 30, and a small hole portion 82 which is smaller than the large hole portion 81. The liquid passage 80 penetrates the vane member 30 in a direction substantially in parallel to the axial direction of the rotation shaft 20. The large hole portion 81 is in communication with the pressure chamber 11, and the small hole portion 82 is in communication with the non-pressure chamber 12.

The valve body 40 is disposed in the large hole portion 81 of the liquid passage 80 such that the valve body 40 can move in the large hole portion 81. When the valve body 40 receives a pressure of the viscous liquid, the valve body 40 closes or opens a boundary portion between the large hole portion 81 and the small hole portion 82.

It is preferable that both the large hole portion 81 and small hole portion 82 are substantially circular holes, and that the valve body 40 is a ball, preferably steel ball having a diameter in the above range, i.e., a diameter larger than an inner diameter of the small hole portion 82 and smaller than an inner diameter of the large hole portion 81. If both the large hole portion 81 and the small hole portion 82 are substantially circular holes and the valve body 40 is a ball, a hermetical state (sealing state) when the valve body 40 closes the boundary portion between the large hole portion 81 and the small hole portion 82 is excellent. As a result, it is possible to prevent the deterioration of the braking force which may be caused by liquid leakage from between the valve body 40 and the boundary portion.

The rotary damper comprising the above members is used in a state in which the one end 20a of the rotation shaft 20 is connected to the shaft body of the open/close body which is the subject to be controlled, and the body case 10 is fixed to the predetermined position. With the rotational motion caused when the open/close body is opened or closed, the shaft body of the open/close body and the rotation shaft 20 connected to the shaft body are rotated and with this rotation, the vane member 20 rotates in the liquid chamber.

For example, when the rotation shaft 20 rotates in the braking force exhibiting direction (in a direction shown with an arrow X in Fig. 3) , the vane member 30 rotates and pushes the viscous liquid in the pressure chamber 11 while allowing the upper end surface 30a, the lower end surface 30b and the tip end surface 30c of the vane member 30 to respectively slide on a lower surface 60b of the closing member which closes the opening of the body case 10, an inner surface of the bottom wall 10e of the body case 10 and an inner peripheral surface 10c of the body case 10.

The pushed viscous liquid flows into the large hole portion 81 of the liquid passage 80 formed in the vane member 30, but the valve body 40 is pushed against the boundary portion between the large hole portion 81 and the small hole portion 82 by the pressure of the flowing viscous liquid, the boundary portion is closed by the valve body 40. Thus, the viscous liquid can not move into the non-pressure chamber 12 through the liquid passage, and moves into the non-pressure chamber 12 through the slight gap formed in the body case 10. That is, the viscous liquid moves from the pressure chamber 11 to the non-pressure chamber 12 through a gap between an outer peripheral surface of the rotation shaft 20 and the tip end surface of the partition wall 10d, a gap between the upper end surface 30a of the vane member 30 and the lower surface 60b of the closing member, a gap between the lower end surface 30b of the vane member 30 and the inner surface of the bottom wall 10e of the body case 10, and a gap between the tip end surface 30c of the vane member 30 and the inner peripheral surface 10c of the body case 10.

The rotation speed of the rotation shaft 20 is reduced by a resistance generated when the viscous liquid moves through the slight gap. With this, a predetermined braking force is applied to the open/close body, and the rotational motion of the open/close body is delayed.

On the other hand, if the rotation shaft 20 rotates in a direction opposite from the braking force exhibiting direction (in a direction shown with an arrow Y in Fig. 3) , the vane member 30 rotates in the opposite direction and pushes the viscous liquid in the non-pressure chamber 12 while allowing the upper end surface 30a, the lower end surface 30b and the tip end surface 30c of the vane member 30 to respectively slide on the lower surface 60b of the closing member which closes the opening of the body case 10, the inner surface of the bottom wall 10e of the body case 10 and the inner peripheral surface 10c of the body case 10.

The pushed viscous liquid flows into the small hole portion 82 of the liquid passage 80 formed in the vane member 30, this pressure pushes back the valve body 40 which closes the boundary portion between the large hole portion 81 and the small hole portion 82, thereby opening the boundary portion. With this, the viscous liquid can pass through the liquid passage 80 and thus, the viscous liquid passes through the liquid passage 80 and moves into the pressure chamber 11 swiftly and without generating a resistance almost at all. As a result, the rotation shaft 20 rotates without being decelerated, no braking force is applied to the open/close body and the open/close body rotates.

According to the rotary damper of this embodiment, when the rotation shaft 20 rotates in the braking force exhibiting direction, the liquid passage 80 is closed and the viscous liquid moves from the pressure chamber 11 into the non-pressure chamber 12 only through the slight gap formed in the body case 10. Therefore, the braking characteristics are varied depending upon the size of the gap through which the viscous liquid passes. According to the embodiment, the vane member 30 is disposed in the liquid chamber such that the vane member 30 rotates as the rotation shaft 20 rotates, while allowing the upper end surface 30a, the lower end surface 30b and the tip end surface 30c of the vane member 30 to respectively slide on the lower surface 60b of the closing member which closes the opening of the body case 10, the inner surface of the bottom wall 10e of the body case 10 and the inner peripheral surface 10c of the body case 10, and the vane member 30 rotates while the tip end surface 30c slides on the inner peripheral surface 10c of the body case 10. Thus, even if a plurality of rotary dampers are manufactured, it is possible to reduce the variation in sizes of the gaps formed in the body cases 10 as compared with the conventional technique, and stable braking characteristics can be obtained.

Since it is unnecessary to separately provide the vane member unlike the conventional technique, it is possible to reduce the number of parts and to reduce the manufacturing cost.

Further, the liquid passage 80 includes the large hole portion 81 formed in the thickness region of the vane member 30 and the small hole portion 82 which is smaller than the large hole portion 81, the vane member 30 penetrates the rotation shaft 20 in the direction substantially in parallel to the axial direction of the rotation shaft 20, i.e., in the vertical direction, the large hole portion 81 is in communication with the pressure chamber 11 and the small hole portion 82 is in communication with the non-pressure chamber 12, and the valve body 40 can move in the large hole portion 81. Thus, the play allowing the valve body 40 to move can be provided even increasing the thickness of the vane member 30. Thus, the thickness of the vane member 30 can be reduced as compared with the conventional technique.

Further, when the vane member 30 and the rotation shaft 20 are integrally formed together, if the liquid passage 80 is formed in the vane member 30, the cost required for forming the mold can be reduced as compared with the conventional technique in which the groove with which the valve member 105 can be engaged is formed in the tip end surface of the vane member 104. Therefore, the manufacturing cost of the rotary damper can be reduced as compared with the conventional technique.

Further, both the large hole portion 81 and the small hole portion 82 are substantially circular holes, and the valve body 40 is the ball. With this configuration, it is possible to enhance the sealing performance, and to prevent a braking force to be exhibited from being deteriorated.

The liquid passage 80 penetrates the vane member 30 in the direction substantially parallel to the axial direction of the rotation shaft 20. Therefore, as shown in Fig. 5, a ratio of the liquid passage 80 occupied by the large hole portion 81 is increased, and it is possible to provide a spring 90 which biases the valve body 40 such that the valve body 40 closes the boundary portion between the large hole portion 81 and the small hole portion 82 in a normal state.

The spring 90 is a compression spring. The valve body 40 is always pushed against the boundary portion between the large hole portion 81 and the small hole portion 82 by the spring 90 to close the boundary portion. Therefore, when the vane member 30 rotates as the rotation shaft 20 rotates in the braking force exhibiting direction, the liquid passage 80 can reliably be closed by the valve body 40 from the initial time point of the rotation. Therefore, the braking force can reliably be exhibited from the initial time point of the rotation of the vane member 30, and rattle is eliminated.

When the rotation shaft 20 rotates in the direction opposite to the braking force exhibiting direction and the vane member 30 rotates correspondingly, the valve body 40 is pushed back by the pressure of the viscous liquid, thereby compressing the spring 90 to open the liquid passage 80.

Although the two vane members 30 are provided such as to be opposed to each other with the rotation shaft 20 interposed therebetween in this embodiment, the present invention is not limited to this configuration. The invention can also be applied to a rotary damper in which one vane member 30 projects from the rotation shaft 20 as shown in Fig. 6.

### INDUSTRIAL APPLICABILITY

As explained above, according to the rotary damper of the present invention described in claim 1, even if a plurality of rotary dampers are manufactured, it is possible to reduce the variation in size of the gap through which the viscous liquid passes when the viscous liquid moves from the pressure chamber to the non-pressure chamber, and more stable braking characteristics can be obtained. The valve body which controls the flow of the viscous liquid can be disposed in the rotary damper without increasing the thickness of the vane member, and the thickness of the vane member can be reduced as compared with the conventional technique.

According to the rotary damper of the invention described in claim 2, hermetical state (sealing state) when the valve body closes the boundary portion between the large hole portion and the small hole portion is excellent. Therefore, it is possible to prevent the deterioration of the braking force which may be caused by liquid leakage from between the valve body and the boundary portion.

According to the rotary damper of the invention described in claim 3, when the vane member rotates in one direction, the valve body can be operated such that the liquid passage is reliably closed from the initial time point of the rotation, and it is possible to reliably exhibit the braking force from that time point.

## Claims

1. A rotary damper comprising
a rotation shaft (20) disposed along an axis of a body case (10),
a partition wall (10d) provided so as to partition a space formed between the rotation shaft (20) and the body case (10),
a vane member (30) disposed to be rotatable with rotation of the rotation shaft (20) in a liquid chamber partitioned by the partition wall (10d) in which viscous liquid is charged, wherein the vane member (30) can rotate while allowing its upper end surface (30a), lower end surface (30b) and tip end surface (30c) to respectively slide on a lower surface (60b) of a closing member which closes an opening of the body case (10), an inner surface of a bottom wall (10e) of the body case (10) and an inner peripheral surface (10c) of the body case (10), the vane member (30) partitions the liquid chamber into a pressure chamber (11) and a non-pressure chamber (12),
a liquid passage (80) which has a large hole portion (81) and a small hole portion (82) smaller than the large hole portion (81) which penetrates the vane member (30) in a direction substantially parallel to an axial direction, the large hole portion (81) being in communication with the pressure chamber (11), and the small hole portion (82) being in communication with the non-pressure chamber (12), and
a valve body (40) movably disposed in the large hole portion (81) of the liquid passage (80),
**characterized in that**
a passage (83) to make the large hole portion (81) communicate with the pressure chamber (11) is made up of a groove formed on one of the upper end surface (30a) or the lower end surface (30b) of the vane member (30) and a passage (84) to make the small hole portion (82) communicate with the non-pressure chamber (12) is made up of a groove formed on the other of the upper end surface (30a) or the lower end surface (30b) of the vane member (30).

2. The rotary damper according to claim 1,
**characterized in that**
the large hole portion (81) and small hole portion (82) are substantially circular holes, the valve body (40) is formed into a spherical shape having a diameter greater than an inner diameter of the small hole portion (82).

3. The rotary damper according to claim 1 or 2,
further comprising a spring (90) which biases the valve body (40) such that the valve body (40) closes a boundary portion between the large hole portion (81) and the small hole portion (82) of the liquid passage (80) in a normal state.

## Patentansprüche

1. Drehdämpfer, mit:
- einer Drehwelle (20), die entlang einer Achse eines Körpergehäuses (10) angeordnet ist,
- einer Trennwand (10d), die so angeordnet ist, dass sie einen zwischen der Rotationswelle (20) und dem Körpergehäuse (10) gebildeten Raum trennt,
- einem Flügelelement (30), das drehbar mit der Drehung der Drehwelle (20) in einer durch die Trennwand (10d) geteilten Flüssigkeitskammer angeordnet ist, in welche eine viskose Flüssigkeit gefüllt ist, wobei sich das Flügelelement (30) drehen kann, während es seiner oberen Endfläche (30a), seiner unteren Endfläche (30b) bzw. seiner Spitzenendfläche (30c) ermöglicht, auf einer unteren Oberfläche (60b) eines Verschlusselements, welches eine Öffnung des Körpergehäuses (10) verschließt, auf einer inneren Oberfläche einer Bodenwand (10e) des Körpergehäuses (10) bzw. auf einer inneren Umfangsfläche (10c) des Körpergehäuses (10) zu gleiten, wobei das Flügelelement (30) die Flüssigkeitskammer in eine Druckkammer (11) und eine Druckloskammer (12) trennt,
- einem Flüssigkeitsdurchlass (80), der einen Großlochabschnitt (81) und einen Kleinlochabschnitt (82) aufweist, der kleiner als der Großlochabschnitt (81) ist, welcher das Flügelelement (30) in einer im Wesentlichen zu einer Axialrichtung parallelen Richtung durchdringt, wobei der Großlochabschnitt (81) in Verbindung mit der Druckkammer (11) und der Kleinlochabschnitt (82) in Verbindung mit der Druckloskammer (12) steht, und ein Ventilkörper (40) in dem Großlochabschnitt (81) des Flüssigkeitsdurchlasses (80) beweglich angeordnet ist, **dadurch gekennzeichnet, dass**
ein Durchlass (83) zum Erzeugen einer Verbindung des Großlochabschnitts (81) mit der Druckkammer (11) aus einer Nut besteht, die auf einer der oberen Endfläche (30a) oder der unteren Endfläche (30b) des Flügelelements (30) gebildet ist, und ein Durchlass (84) zum Erzeugen einer Verbindung des Kleinlochabschnitts (82) mit der Druckloskammer (12) aus einer Nut besteht, die an der anderen Fläche der oberen Endfläche (30a) oder der unteren Endfläche (30b) des Flügelelements (30) gebildet ist.

2. Drehdämpfer nach Anspruch 1, **dadurch gekennzeichnet, dass** der Großlochabschnitt (81) und der Kleinlochabschnitt (82) im Wesentlichen kreisrunde Löcher sind, wobei der Ventilkörper (40) kugelförmig mit einem Durchmesser größer als ein Innendurchmesser des Kleinlochabschnitts (82) ausgebildet ist.

3. Drehdämpfer nach Anspruch 1 oder 2, ferner mit einer Feder (90), die den Ventilkörper (40) so vorspannt, dass der Ventilkörper (40) einen Grenzabschnitt zwischen dem Großlochabschnitt (81) und dem Kleinlochabschnitt (82) des Flüssigkeitsdurchlasses (80) in einem Normalzustand verschließt.

## Revendications

1. Amortisseur rotatif, comprenant :
un arbre rotatif (20) disposé le long d'un axe d'un corps de boîtier (10),
une cloison (10d) prévue de manière à cloisonner un espace formé entre l'arbre rotatif (20) et le corps de boîtier (10),
un élément en aube (30) disposé de manière à être en rotation avec la rotation de l'arbre rotatif (20) dans une chambre à liquide cloisonnée par la cloison (10d) et dans laquelle un liquide visqueux est chargé,
dans lequel l'élément en aube (30) est capable de tourner tout en permettant à sa surface terminale supérieure (30a), à sa surface terminale inférieure (30b) et à une surface terminale d'embout (30c) de coulisser respectivement sur une surface inférieure (60b) d'un élément de fermeture qui ferme une ouverture du corps de boîtier (10), une surface intérieure d'une paroi de fond (10e) du corps de boîtier (10) et une surface périphérique intérieure (10c) du corps de boîtier (10), l'élément en aube (30) cloisonnant la chambre à liquide en une chambre sous pression (11) et une chambre sans pression (12),
un passage à liquide (80) qui comporte une portion en forme de grand trou (81) et une portion en forme de petit trou (82), plus petit que la portion en forme de grand trou (81) qui pénètre l'élément en aube (30) dans une direction sensiblement parallèle à une direction axiale, la portion en forme de grand trou (81) étant en communication avec la chambre sous pression (11), et la portion en forme de petit trou (82) étant en communication avec la chambre sans pression (12), et un corps de valve (40) disposé de façon mobile dans la portion en forme de grand trou (81) du passage à liquide (80),
**caractérisé en ce que**
un passage (83) pour faire communiquer la portion en forme de grand trou (81) avec la chambre sous pression (11) est constitué d'une rainure formée sur l'une parmi la surface terminale supérieure (30a) et la surface terminale inférieure (30b) de l'élément en aube (30), et un passage (84) pour faire communiquer la portion en forme de petit trou (82) avec la chambre sans pression (12) est constitué d'une rainure formée sur l'autre parmi la surface terminale supérieure (30a) et la surface terminale inférieure (30b) de l'élément en aube (30).

2. Amortisseur rotatif selon la revendication 1,
**caractérisé en ce que**
la portion en forme de grand trou (81) et la portion en forme de petit trou (82) sont des trous sensiblement circulaires, le corps de valve (40) étant formé dans une forme sphérique ayant un diamètre supérieur à un diamètre intérieur de la portion en forme de petit trou (82).

3. Amortisseur rotatif selon la revendication 1 ou 2,
comprenant en outre un ressort (90) qui sollicite le corps de valve (40) de telle façon que le corps de valve (40) ferme une portion frontière entre la portion en forme de grand trou (81) et la portion en forme de petit trou (82) du passage à liquide (80) dans une situation normale.
